Europäisches Patentamt

European Patent Office

Office européen des brevets

(11) Veröffentlichungsnummer: **0 183 944**
**B1**

(12) **EUROPÄISCHE PATENTSCHRIFT**

(45) Veröffentlichungstag der Patentschrift:
**13.12.89**

(51) Int. Cl.⁴: **B29C 45/17**

(21) Anmeldenummer: **85112853.8**

(22) Anmeldetag: **10.10.85**

(54) Werkzeug-Einbau- und Spannvorrichtung an einer Spritzgiessmaschine.

(30) Priorität: 06.12.84 DE 3444574
14.01.85 DE 3501000

(43) Veröffentlichungstag der Anmeldung:
**11.06.86 Patentblatt 86/24**

(45) Bekanntmachung des Hinweises auf die Patenterteilung:
**13.12.89 Patentblatt 89/50**

(84) Benannte Vertragsstaaten:
**AT CH FR IT LI NL**

(56) Entgegenhaltungen:
**EP-A- 0 092 686**
**DE-A- 1 629 746**
**FR-A- 2 528 757**

(73) Patentinhaber: MANNESMANN Aktiengesellschaft,
Mannesmannufer 2, D-4000 Düsseldorf 1(DE)

(72) Erfinder: Fruntzek, Peter, Dipl.-Ing., Lindenstrasse 22,
D-8541 Götzenreuth(DE)

(74) Vertreter: LOUIS, PÖHLAU, LOHRENTZ & SEGETH,
Ferdinand-Maria-Strasse 6, D-8130 Starnberg(DE)

ACTORUM AG

## Beschreibung

Die Erfindung betrifft eine Werkzeug-Einbau- und -Spannvorrichtung an einer spritzgießmaschine mit den Merkmalen gemäß dem Oberbegriff des Anspruches 1.

Bei bekannten sogenannten Schnellwechsel- und Schnellspannvorrichtungen dieser Art (vgl. Aufsatz "Produktionssteigerung beim Spritzgießen durch Verringern der Maschinen-Stillstandzeiten" - Kunststoffe 70 (1980) S. 128 bis 131; DE-OS 3215567) sind die Abstützflächen der Konsole und die seitlichen Führungsflächen so ausgebildet, daß das Werkzeug von oben oder von der Seite her in schon weitgehend genau ausgerichteter Lage eingeführt werden muß. Das Werkzeug bewegt sich innerhalb der Führung entweder durch Absenken oder durch Einschieben mittels einer entsprechenden Vorrichtung in praktisch paralleler Ausrichtung zu der Formaufspannplatte, bis es - bei Einführung von oben - auf der Stützfläche der Konsole aufsteht oder - bei Einführung von der Seite - an einen Anschlag gelangt, der die richtige Position markiert. Nach dem Einnehmen dieser Position werden vorzugsweise hydraulisch betätigbare Schnellspannelemente wirksam, die an seitlichen Vorsprügen des Werkzeuges angreifen und das Werkzeug auf die Formaufspannplatte pressen. Im Verlauf der Einführbewegung des Werkzeuges vollzieht sich auch die Kuppelung der in Anschlußleisten vorgesehenen Anschlüsse für Temperiermedium, Energieversorgung, Blaseluft und dgl. Voraussetzung für eine wirkungsvolle Verringerung der Umrüstzeiten mittels derartiger Vorrichtungen ist, daß alle Werkzeuge unabhängig von ihrer sonstigen Gestalt und Grösse an ihrer den Formaufspannplatten zugewendeten Seite insoweit gleiche Abmessungen besitzen, daß durch das Aufstehen auf der Stützfläche der Konsole und durch den seitlichen Anschlag an den Seitenführungsflächen eine exakte Ausrichtung des Angusses zur Formaufspannplatte gegeben ist. Zweckmässigerweise wird das durch eine Adapterplatte erreicht, die auf den Rücken der Werkzeuge aufgeschraubt ist und die darüber hinaus im Spannzustand von den Schnellspannelementen übergriffen wird.

Obwohl diese bekannten Vorrichtungen bereits zu einer beträchtlichen Verkürzung der Umrüstzeiten geführt haben, ist der Zeitaufwand, insbesondere bei der Handhabung grosser Werkzeuge, die mehrere Tonnen wiegen, immer noch wesentlich. Um nämlich diese Werkzeuge in die an den Formaufspannplatten vorgesehenen Führungen einfahren zu können, müssen sie von vornherein schon sehr genau relativ zu den Führungen ausgerichtet sein und mit grösster Sorgfalt ab- bzw. eingefahren werden, um die Führungen nicht zu beschädigen oder sich darin zu klemmen. Das erfordert Präzisionsarbeit der Bedienungspersonen, die zeitaufwendig ist. Das gilt insbesondere für den Fall, daß die beiden Werkzeughälften gemeinsam, als komplettes Werkzeug, zwischen die Formaufspannplatten eingefahren werden, da hierbei die Formaufspannplatten auch exakt auf den entsprechenden Abstand auseinandergefahren sein müssen.

Der Erfindung liegt daher die Aufgabe zugrunde, eine Vorrichtung der genannten Art zu schaffen, die kein präzises Ausrichten des Werkzeuges vor dem Einfahren zwischen die Formaufspannplatten und keine außergewöhnliche Sorgfalt beim Einfahren in die Führungen voraussetzt, um dadurch die Umrüstzeit noch weiter zu verringern.

Erfindungsgemäß wird diese Aufgabe gelöst durch die Merkmale gemäß dem Kennzeichen des Anspruches 1.

Dadurch, daß jede Konsole eine sich senkrecht von der zugeordneten Formaufspannplatte weg erstreckende Führungsund Schiebefläche aufweist und die Seitenführungsflächen zur Zentrumsachse der Formaufspannplatten hin schräg verlaufen, kann das Werkzeug in einem bestimmten Abstand von den Formaufspannplatten auf der Konsole abgesetzt werden, weil es anschließend durch das Zusammenfahren der Formaufspannplatten zu diesen hin verschoben wird, wobei die Seitenführungsflächen im Verlauf dieser Verschiebebewegung an den Werkzeugseitenrändern zur Anlage kommen und dabei das Werkzeug ausrichten, so daß es bei der endgültigen Anlage an den Formaufspannplatten exakt die gewünschte Position einnimmt. Wesentlich dabei ist nur, daß das Werkzeug mit den Rändern der Werkzeughälften, z.B. den Rändern der am Rücken der Werkzeughälften aufgeschraubten Adapterplatten, auf je einer Konsole aufsteht. Die genaue Einhaltung eines bestimmten Abstandes der Formaufspannplatten voneinander ist selbst dann nicht erforderlich, wenn das Werkzeug - was bevorzugt ist - in geschlossenem Zustand der beiden Werkzeughälften, d.h. als Block, eingefahren wird.

Wenn das Werkzeug nur von oben her zwischen die Formaufspannplatten abgesenkt werden soll, ist es möglich, bezüglich der Zentrumsachse der Formaufspannplatten gegenüberliegend Seitenführungsflächen auszubilden, die zueinander konvergierend verlaufen. Durch diese wird dann beim Zusammenfahren der Formaufspannplatten das Werkzeug in die richtige Seitenlage verbracht. Höhenmässig stimmt die Position des Werkzeuges von vornherein, da dementsprechend die Führungsfläche der Konsolen ausgerichtet ist. Wird das Werkzeug, was bevorzugt ist, von der Seite der durch eine entsprechende, nachfolgend noch näher beschriebene Vorrichtung eingefahren, so sind nur auf der der Einfahrseite gegenüberliegenden Seite der Formaufspannplatten Seitenführungsflächen vorhanden. Diese dienen dann für den Einschiebevorgang, bei dem das Werkzeug auf der Führungsfläche der Konsole gleitet oder rollt, als Anschlag, durch den der Einschiebevorgang beendet wird.

Die durch die erfindungsgemässe Vorrichtung geschaffene Möglichkeit, das Werkzeug in einem bestimmten Abstand von den Formaufspannplatten auf die Konsolen aufzusetzen oder aufzuschieben, erlaubt es auch, an dem Werkzeug einen - in der Regel zur Formschließseite hin ausragenden - Auswerferstift vorzusehen oder dort zu belassen, der bei dem nachfolgenden Zusammenfahren der Formaufspannplatten in eine Bohrung der Formaufspannplatte einfährt und selbsttätig mit einem Auswerfermechanismus kuppelbar ist. Bei den bekannten Schnellspannvorrichtungen der eingangs beschriebenen Art kann ein derartiger Auswerferstift nich am Werkzeug belassen werden, da er das Einführen des Werkzeuges in die parallel zur Formaufspannplatte verlaufenden Führungen blockieren würde. Die Einbringung und die Kupplung des Auswerfermechanismus mit dem Auswerferstift musste deshalb nachträglich, nach dem Festspannen des Werkzeuges, vorgenommen werden.

Nach einer besonders vorteilhaften Weiterbildung der Erfindung ist vorgesehen, daß jede Konsole durch eine Anzahl von sich parallel nebeneinander von der Formaufspannplatte weg erstreckenden Armen gebildet ist, die zwischen sich Lücken bilden. Dabei stehen die Arme der einen Konsole zu den Armen der anderen Konsole derart "auf Lücke", daß bein Zusammenfahren der Formaufspannplatte die Arme jeweils in die Lücken der gegenüberliegenden Konsole einfahren können. Auf diese Weise ist es möglich, die Schiebe- und Führungsfläche der Konsole - gemessen senkrecht zur Formaufspannplatte - ziemlich breit auszubilden, was wiederum ein weites Auseinanderfahren der Formaufspannplatten für das Einschieben oder Absenken des Werkzeuges gestattet und eine entsprechende Erleichterung beim Umrüstvorgang bedeutet. Nach einer zweckmässigen Weiterbildung kann die Konsole an der Formaufspannplatte, der der Auswerfermechanismus zugeordnet ist, breiter ausgebildet sein, um dem Umstand Rechnung zu tragen, daß infolge des aus dem Werkzeug herausragenden Auswerferstiftes der Rücken der entsprechenden Werkzeughälfte einen grösseren Abstand von der zugeordneten Formaufspannplatte einhalten muß. Der Zentriervorgang, der beim Zusammenfahren der Formaufspannplatten abläuft, wird begünstigt, wenn nach einer Weiterbildung an zumindest einer Werkzeughälfte zusätzliche, mit der Zentrieröffnung der Formaufspannplatte zusammenwirkende Zentrierelemente vorgesehen sind. Diese können z.B. bezüglich der Zentrieröffnung diametral gegenüberliegende Kreisringsegmente sein (vgl. DE-OS 2938665), deren freie Ränder an der Außenseite als Einführflächen dienende und mit dem Rand der Zentrieröffnung zusammenwirkende Konusflächen aufweisen.

Aus der Art des Ausrichtvorganges für das Werkzeug ergibt sich, daß die Kupplungen der in den Anschlußleisten vorgesehenen Anschlüsse zu den Formaufspannplatten hinweisen, da sie gegen Ende des Schiebevorganges mit den entsprechenden Kupplungen an den Formaufspannplatten in Eingriff treten. Zu diesem Zweck sind die werkzeugseitigen Anschlußleisten an einem Rand des Werkzeuges angeordnet, zweckmässigerweise an der Adapterplatte, und die Anschlüsse weisen zu der jeweils zugeordneten Formaufspannplatte.

Für das Einfahren des Werkzeuges von der Seite her ist in bekannter Weise ein Werkzeugwagen vorgesehen, der eine Verschiebefläche für das Werkzeug und eine Schiebevorrichtung zu dessen Einschieben aufweist. Die Verschiebefläche ist erfindungsgemäß durch zwei zueinander parallele, den Werkzeugkanten (z.B. den Rändern der Adapterplatten) zugeordnete Schienen gebildet, von denen eine feststehend und die andere in ihrer Querrichtung dazu verstellbar ist. Hierdurch können unterschiedlich breite Werkzeuge auf dem Werkzeugwagen aufgenommen werden. Die feststehende Schiene dient dabei als Orientierungspunkt bei der Positionierung des Werkzeugwagens relativ zur Spritzgießmaschine, z.B. in der Weise, daß sie stets der spritzseitigen, feststehenden Formaufspannplatte zugeordnet ist. Sie kann daher - ohne Einhaltung einer grösseren Präzision - jeweils zu der spritzseitigen Konsole ausgerichtet werden, so daß beim Wirksamwerden des Schiebeantriebes das Werkzeug richtig auf die entsprechende Konsole aufgeschoben wird.

Andere vorteilhafte Ausgestaltungen der Erfindung ergeben sich aus den Unteransprüchen.

Ein Ausführungsbeispiel der Erfindung ist nachfolgend anhand der beiliegenden Zeichnungen näher erläutert. In den Zeichnungen zeigen:

Fig. 1 eine Ansicht der spritzseitigen Formaufspannplatte, gesehen vom Werkzeug her, mit einer Seitenansicht des Werkzeugwagens in Wechselposition;

Fig. 2 eine Teilansicht der Spritzgießmaschine und des Werkzeugwagens von oben, wobei die Werkzeuge nicht eingezeichnet sind;

Fig. 3 eine Teil-Seitenansicht der Spritzgießmaschine, gesehen in Richtung X in Fig. 1, wobei nur ein Werkzeug eingezeichnet ist;

Fig. 4 eine der Fig. 3 entsprechende Teil-Seitenansicht der Spritzgießmaschine ohne Werkzeugwagen und im eingefahrenen Zustand der Werkzeuges;

Fig. 5 eine der Fig. 4 entsprechende Seitensicht der Spritzgießmaschine im zusammengefahrenen Zustand der Formaufspannplatten, in dem das Werkzeug positioniert und gespannt ist;

Fig. 6 eine der Fig. 1 entsprechende Teilansicht in grösserem Maßstab, aus dem Einzelheiten des Werkzeuges und des Werkzeugwagens hervorgehen;

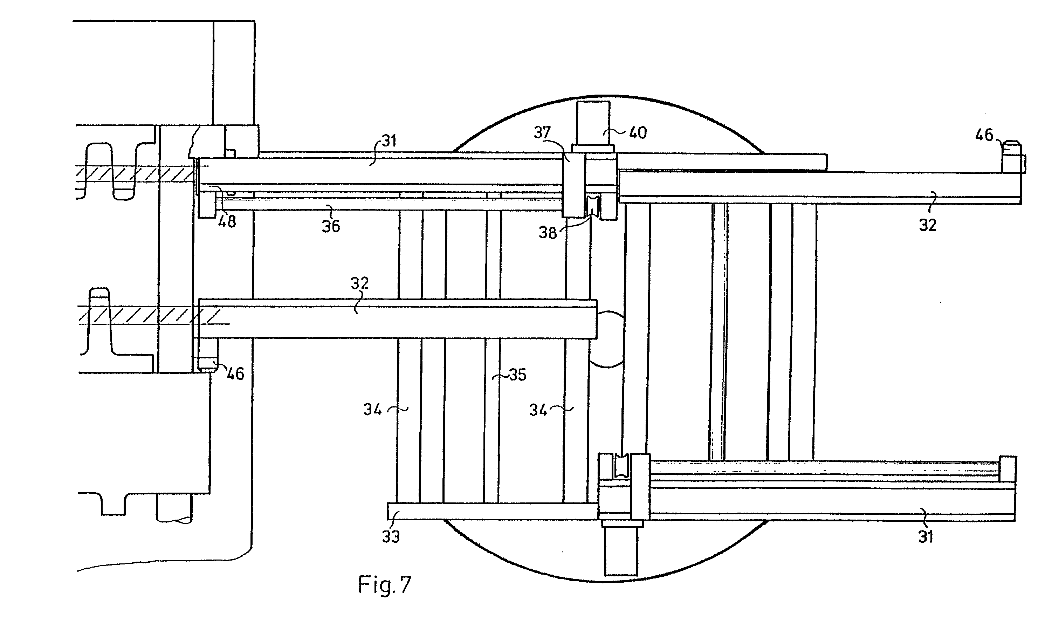

Fig. 7 eine der Fig. 2 entsprechende Draufsicht auf den Werkzeugwagen in grösserem Maßstab, und

Fig. 8 eine der Fig. 3 entsprechende Ansicht des Werkzeugwagens in grösserem Maßstab.

Die in den Zeichnungen gezeigte Spritzgießmaschine kann von beliebiger Bauart sein; gezeigt ist eine Spritzgießmaschine mit einer spritzseitigen feststehenden Formaufspannplatte 1 und einer auf Holmen 2 längsverschiebbaren Formaufspannplatte 3, die durch einen nur angedeuteten Kniehebelmechanismus 4 betätigbar ist. Weitere Einzelheiten der Spritzgießmaschine sind, da sie hier nicht erforderlich sind, nicht gezeigt.

An den Formaufspannplatten 1 und 3 sind hydraulisch betätigbare Schnellspannelemente 5 bekannter Bauart befestigt, die drei Rändern des Werkzeuges 6, nämlich den beiden Seiten und oben, zugeordnet sind. In der Nähe der beiden gegenüberliegenden Seitenränder der Formaufspannplatten sind Anschlußleisten 8 befestigt, zu denen Leitungen 9 für ein Temperiermedium, für elektrischen Strom, für Blaseluft od.dgl. führen. Die Anschlüsse in den Anschlußleisten 8 sind normalerweise geschlossen; durch selbsttätig wirkende Kupplungen können sie beim Einfahren der entsprechenden werkzeugseitigen Anschlüsse geöffnet werden (vgl. DE-OS 3127797).

In der schließseitigen Formaufspannplatte 3 ist ein hydraulisch betätigbarer Auswerfermechanismus 10 bekannter Bauart angeordnet, der mit einem Auswerferstift 11 an dem Werkzeug 6 kuppelbar ist.

Jedes Werkzeug 6 besteht aus zwei Werkzeughälften, die an ihrer Rückseite jeweils eine Adapterplatte 12 tragen, deren Abmessungen für jedes Werkzeug 6 gleich sind.

An den beiden Formaufspannplatten 1 und 3 ist jeweils etwa in Höhe der unteren Holme 2 eine Konsole 14 befestigt, die jeweils durch vier von der zugeordneten Aufspannplatte 1 bzw. 3 senkrecht abstehende Arme 15 gebildet ist. Jeder der Arme 15 besitzt auf seiner Oberseite eine ebene horizontale Fläche 16, die alle in einer gemeinsamen Ebene liegen und insgesamt eine Führungs- und Schiebefläche bilden. In der Nähe des freien Endes der Arme 15 ist jede Fläche 16 durch eine hochstehende Schulter 17 begrenzt.

Die Arme 15 jeder Konsole 14 sind zueinander parallel und bilden zwischen sich Lücken. Dabei sind die Arme 15 an der feststehenden Formaufspannplatte 1 gegenüber denjenigen an der beweglichen Formaufspannplatte 3 zueinander in Querrichtung versetzt angeordnet, so daß sie "auf Lücke" stehen, d.h. beim Zusammenfahren der Formaufspannplatten 1 und 3 in die Lücken der gegenüberliegenden Konsole 14 eindringen können. Die Arme 15 der beweglichen Formaufspannplatte 3 sind länger als diejenigen der feststehenden Formaufspannplatte 1, aus Gründen, die nachfolgend noch deutlich werden.

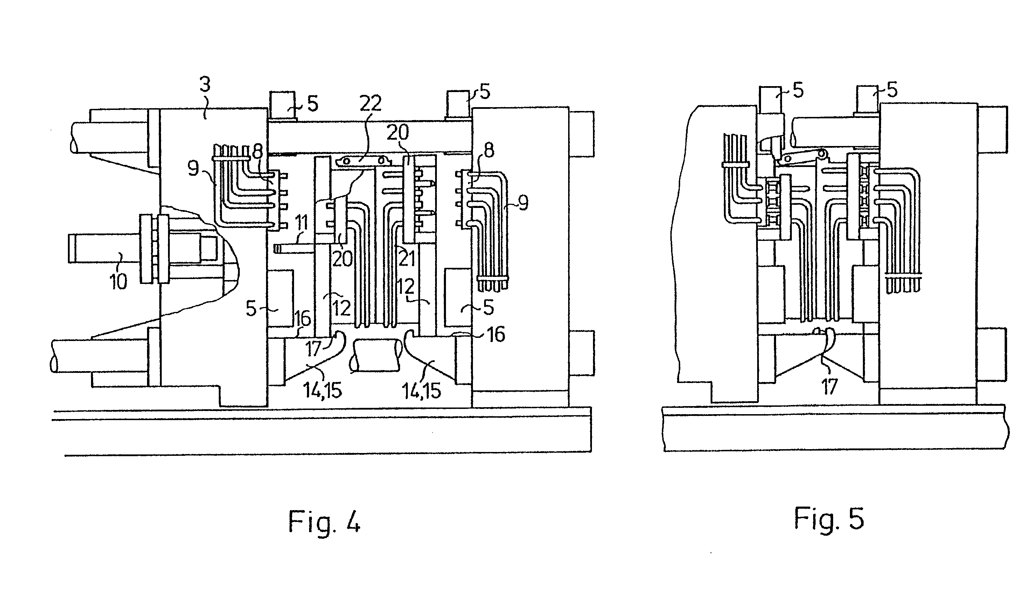

An gegenüberliegenden Seitenrändern des Werkzeuges 6 sind, wie sich deutlicher aus den Fig. 4 und 5 ergibt, werkzeugseitige Auschlußleisten 20 angeordnet, von denen aus Leitungen 21 in das Werkzeuginnere führen. Die Anschlußseiten der in den Anschlußleisten 20 befindlichen Anschlüsse weisen bezüglich dem Rücken der Werkzeughälften jeweils nach hinten, d.h. im eingefahrenen Zustand des Werkzeuges 6 zu der zugeordneten Formaufspannplatte hin. Die Werkzeughälften sind zu dem einheitlichen Werkzeug geschlossen und für die Zeitdauer des Wechsel- und Spannvorganges durch einen Verriegelungshebel 22 miteinander verriegelt.

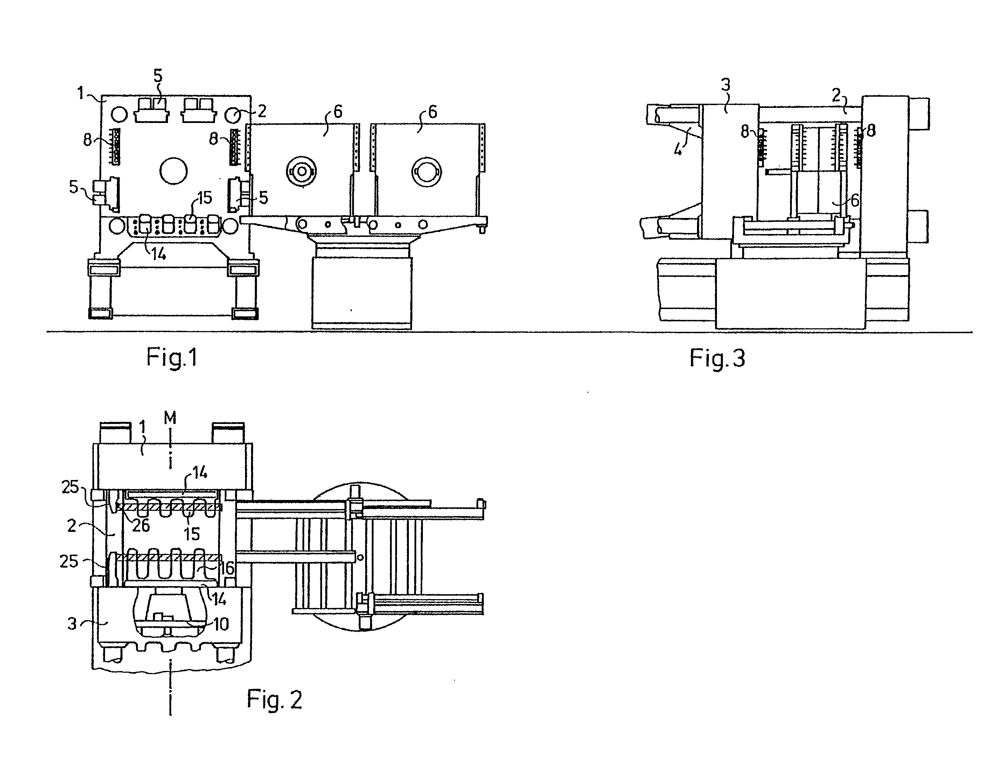

An der der Einschiebeseite der Spritzgießmaschine (vgl. Fig. 2) gegenüberliegenden Seite der Formaufspannplatten 1 und 3 sind an diesen Seitenführungen 25 befestigt, die zur Mittelachse M der Formaufspannplatten hinweisende Seitenführungsflächen 26 besitzen. Diese Seitenführungsflächen 26 verlaufen vom freien Ende der Seitenführungen 25 aus zur jeweiligen Formaufspannplatte 1 bzw. 3 hin zunächst senkrecht zu den Formaufspannplatten, weisen jedoch in einem bestimmten Abstand vom freien Ende eine Schrägfläche auf, die - gesehen zu der jeweiligen Formaufspannplatte hin - zu der Mittelachse M konvergierend verläuft. Anschließend an diese Schrägfläche folgt wieder bis hin zur Fläche der Formaufspannplatte eine parallel zur Mittelachse M angeordnete Fläche. Alle genannten Seitenführungsflächen 26 einschließlich deren Schrägfläche stehen senkrecht zu der Führungsfläche 16 der Konsole 14. Wie sich aus Fig. 2 ergibt, ist die Seitenführung 25 an der beweglichen Formaufspannplatte 3 - in Übereinstimmung mit der entsprechenden Ausbildung der Konsole 14, 15 - länger als die gegenüberliegende Seitenführung.

Zum Transport und zum Einschieben der Werkzeuge 6 ist ein im Ganzen mit 30 bezeichneter Werkzeugwagen vorgesehen, der beispielsweise längs einer nicht gezeigten Induktionsspur auf Rollen verfahrbar ist. Der Werkzeugwagen 30 weist ein Traggestell auf, des zur Aufnahme von zwei Werkzeugen 6 geeignet ist (s. Fig. 1). Das Traggestell wird durch je ein nach gegenüberliegenden Seiten hin ausragendes Paar von Schienen 31, 32 gebildet, von dem die Schiene 31 feststehend und die Schiene 32 quer zu ihrer Längserstreckung beweglich ist. Die Schienen lagern auf einem Rahmen 33, der zylindrische Holme 34 aufweist. An dem Rahmen 33 ist außerdem eine Gewindespindel 35, parallel zu den Holmen 34, drehbar gelagert; parallel zu der feststehenden Schiene 31 ist an dieser eine weitere Gewindespindel 36 drehbar gelagert, mit der ein Schiebeblock 37 mit einem daran angeordneten Schiebearm 38 in Schraubeingriff steht. Die Gewindespindel 36 trägt ein Schneckenrad 39, das über eine von einem Motor 40 angetriebene Schnecke 41 in Drehung versetzbar ist. Die Gewindespindel 35 ist in ähnlicher, nicht dargestellter Weise antreibbar, um hierdurch den Abstand der Schienen 31, 32 voneinander auf den durch das jeweilige Werkzeug 6 geforderten Wert einzustellen.

Am freien Ende der Schienen 31, 32 sind Zentrier- und Stützelemente 45, 46 angedeutet, von denen das nach unten ragende Zentrier- und Stützelement 45 in eine entsprechende Zentrieröffnung 48 an der Spritzgießmaschine einfahren kann, während das Element 46 im wesentlichen nur zur Abstützung an einer entsprechenden Fläche der Spritzgießmaschine dient. Zum Zwecke des "Andockens" der freien Enden der Schienen 31, 32 an den entsprechenden Stellen der Spritzgießmaschine ist das den Rahmen 33 tragende Gestell des Wagens 30 auf nicht näher gezeigte Weise, vorzugsweise hydraulisch, in Längsrichtung der Schienen 31, 32 vorwärts und rückwärts um ein bestimmtes Maß verstellbar. Außerdem ist dieses Gestell, ebenfalls durch einen nicht näher gezeigten Mechanismus, um die Vertikalachse V um 180° verschwenkbar, so daß bedarfsweise das eine oder andere Paar der Schienen 31, 32 der Spritzgießmaschine zugewendet werden kann.

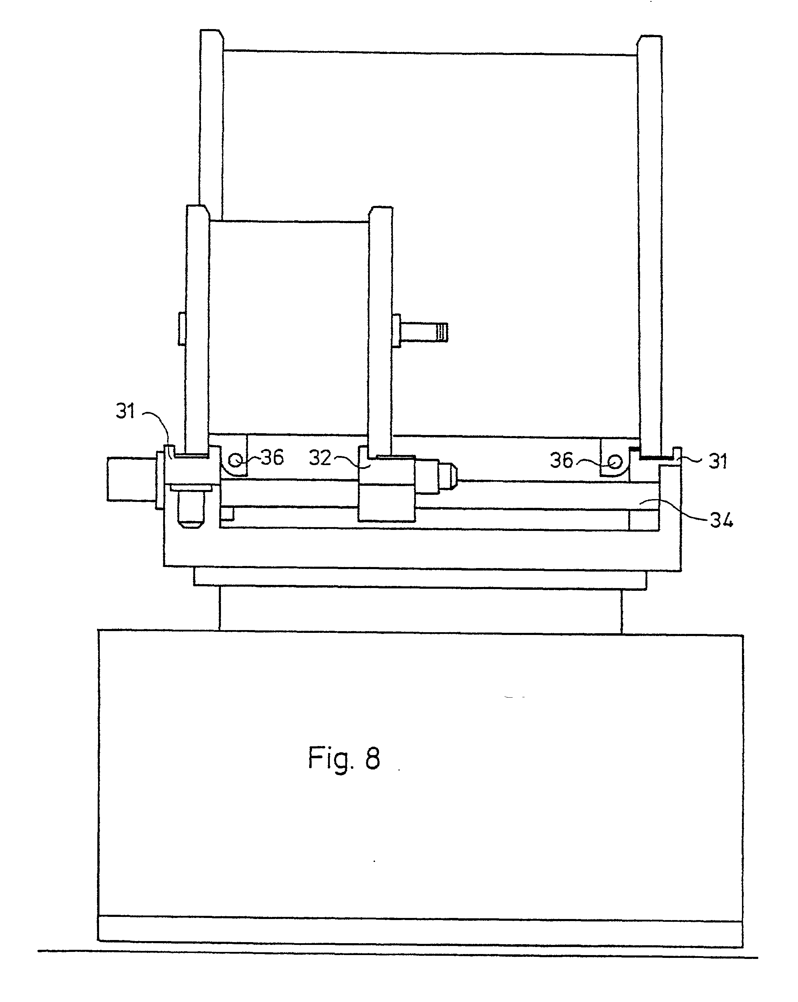

Wie aus Fig. 8 hervorgeht, haben die feststehenden Schienen 31 ein U-Profil, in welchem der unter Rand der Adapterplatte des Werkzeuges 6 gleiten kann, während die beweglichen Schienen 32 ein L-Profil aufweisen. Die Schienen 31, 32 und ggf. auch die Führungsflächen 16 der Konsolen 14 sind mit einem reibungsmindernden verschleißarmen Gleitbelag belegt.

Die Wirkungsweise der erfindungsgemässen Vorrichtung ist folgende:

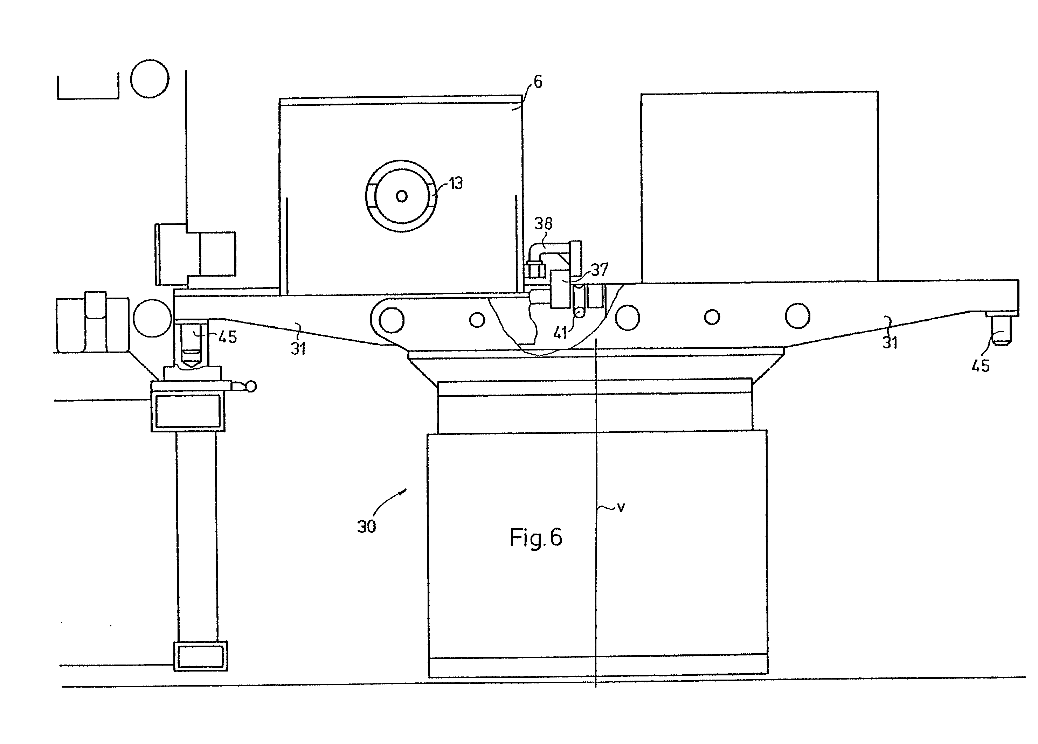

Durch die zentrale Steuerung der Spritzgießmaschine oder ggf. einer ganzen Anlage von Spritzgießmaschinen erhält der Wagen 30 den Befehl, an einer bestimmten Spritzgießmaschine das Werkzeug gegen ein anderes Werkzeug auszutauschen. Aufgrund dieses Befehls bewegt sich der Wagen 30 programmgesteuert zu einem Werkzeuglager, wo entweder ebenfalls automatisch oder von Hand ein neues Werkzeug 6 auf die Schienen 31, 32 aufgesetzt wird. Daraufhin fährt der Wagen 30 an die entsprechende Spritzgießmaschine heran und "dockt" mit den Zentrier- und Stützelementen 45, 46 an den entsprechenden Stellen der Spritzgießmaschine an. Dabei befindet sich das auszutauschende Werkzeug (Werkzeug II in Fig. 1) auf dem von der Spritzgießmaschine abgewendeten Schienenpaar 31, 32. Der Schiebeblock 37 des leeren Schienenpaares 31, 32 wird durch Antrieb des Motors 40 bis an das Ende der Schienen 31, 32 vorgefahren, so daß der Schiebearm 38 mit nicht gezeigten Greifelementen in entsprechende seitliche Ösen oder Nuten (nicht gezeigt) des Werkzeuges 6 in der Spritzgießmaschine einfahren und darin formschlüssig verrasten kann. Daraufhin geben die Spannvorrichtungen 5 das Werkzeug frei und die Formaufspannplatten 1, 3 fahren auseinander. Während des Auseinanderfahrens gleiten die unteren Ränder der Adapterplatten 12 beider Werkzeughälften auf der zugeordneten Führungsfläche 16, bis sie an der Schulter 17 der jeweils zugeordneten Konsole 14 zur Anlage kommen und im Zuge des weiteren Auseinanderfahrens der Formaufspannplatten 1, 3 das Werkzeug damit in eine Position gezogen wird, in der es in einem solchen Abstand von der spritzseitigen Formaufspannplatte 1 angeordnet ist, daß es mit seiner dieser Formaufspannplatte zugewendeten Adapterplatte 12 mit der Schiene 31 fluchtet. In dieser Lage ist auch der Auswerferstift 11 völlig von der Formaufspannplatte 3 freigekommen. Durch geringfügiges Nachgeben der Formaufspannplatten 1, 3, z.B. um einen Millimeter, werden die bis dahin hart an den Schultern 17 anliegenden Adapterplatten 12 von diesen gelöst, so das das Werkzeug 6 (Werkzeug I) nunmehr durch entgegengesetzte Betätigung des Motors 40 aus dem Raum zwischen den Formaufspannplatten 1, 3 auf die Schienen 31, 32 gezogen werden kann. Ist dieses Werkzeug voll aus der Spritzgießmaschine entfernt, so werden durch entsprechende Betätigung des Gestells des Wagens 30 die Zentrier- und Stützelemente 45, 46 aus den entsprechenden Ausnehmungen der Spritzgießmaschine wieder herausbewegt, und das Gestell schwenkt um 180° um die Vertikalachse V, so daß nunmehr das neue Werkzeug (Werkzeug II) in die Einbaustellung gelangt und die Zentrier- und Stützelemente 45, 46 des dieses Werkzeug tragenden Schienenpaares 31, 32 "andocken" können. Die feststehende Schiene 31 befindet sich dabei, ebenfalls programmgesteuert, an einer Stelle relativ zur Spritzgießmaschine, in der diese Schiene mit der Führungsfläche 16 der Konsole 14 an der feststehenden Formaufspannplatte 1 fluchtet. Nunmehr wird der Motor 40 betätigt, so daß über den Schiebeblock 37 und den Schiebearm 38 das Werkzeug 6 parallel zu den Formaufspannplatten 1, 3 auf die Führungsflächen 16 der Konsolen 14 aufgeschoben wird. Zuvor sind die Formaufspannplatten 1, 3 so weit auseinandergefahren worden, daß mit Sicherheit das Werkzeug 6 auch unter Berücksichtigung des nach hinten ausragenden Auswerferstiftes 11 behinderungsfrei zwischen die Formaufspannplatten eingefahren werden kann. Wie geschildert, bedarf es diesbezüglich keiner besonderes exakten Abstandsregulierung der Formaufspannplatten, da nur sichergestellt sein muß, daß die unteren Ränder der Adapterplatten 12 des Werkzeuges 6 auf die Führungsflächen 16 der Konsolen 14 gelangen und der Auswerferstift 11 nicht an der beweglichen Formaufspannplatte 3 anstösst. Das Einschieben des Werkzeuges 6 erfolgt, bis der in Schieberichtung vordere seitliche Rand der Adapterplatten 12 (oder einer davon) an der Seitenführungsfläche 26 der Seitenführungen 25 (oder einer davon) anstösst. Die Betätigung des Motors 40 wird daraufhin unterbrochen, was entweder durch nicht gezeigte Endschalter oder über die Stromaufnahme des Motors 40 gesteuert werden kann. Da die Formaufspannplatten 1, 3 entsprechend weit auseinandergefahren sind, wird der Anschlag regelmässig an dem gegeüber den Formaufspannplatten senkrecht ausgerichteten Teilen der Seitenführungsflächen 26 erfolgen. In dieser Position ist das Werkzeug 6 zwar höhenmässig aufgrund der exakten Lage der Führungsfläche 16 positioniert, jedoch nicht in Seitenrichtung. Jedoch fahren nunmehr, ebenfalls programmgesteuert, die Formaufspannplatten 1 und 3 aufeinander zu, wobei das Werkzeug auf der Führungsfläche 16 mindestens einer der Konsolen 14 rutscht und an die Formaufspannplatten heranbewegt wird. Bei dieser parallel zur Zentralachse M gerichteten Verschiebebewegung läuft der seitliche Rand der Adapterplatten 12 an der schrägen Seitenführungsfläche 26 auf, so daß hierdurch das Werkzeug auch quer zur Zentralachse M auf den Führungsflächen 16 verschoben wird, bis es exakt ausgerichtet ist. Während des letzten Teils der Verschiebebewegung treten zumindest an der Einspritzöffnung der Werkzeuges angeordnete Zentrierelemente in Form von Kreisringsegmenten 13 (Fig. 6) in die Zentrierbohrung der feststehenden Formaufspannplatte 1 ein und unterstützen die seitliche Ausrichtung. Befinden sich beide Adapterplatten 12 des Werkzeuges 6 in fester Anlage an der jeweils zugehörigen Formaufspannplatte, so fahren die Spannelemente gesteuert ein und pressen das Werkzeug an.

Während des Zusammenfahrens der Formaufspannplatten 1, 3 ist auch der Auswerferstift 11 in die zugehörige Bohrung der beweglichen Formaufspannplatte 3 eingefahren. Am Ende der Fahrbewegung erreicht er eine selbsttätige Kupplung des Auswerfermechanismus 10, die zu diesem Zweck in eine Kuppelstellung voreingestellt ist. Kupplungen dieser Art sind bekannt und brauchen hier nicht näher erläutert zu werden (sog. HASCO-Kupplung der Firma HASCONORMALIEN HASENCLEVER & Co. 5880 Lüdenscheid). Am Ende der Verfahrbewegung der Formaufspannplatten sind auch die Arme 15 der Konsolen 14 in der aus Fig. 5 ersichtlichen Weise in die Lücken der jeweils gegenüberliegenden Konsole 14 eingefahren und ebenso haben die Kupplungen der werkzeugseitigen Anschlußleisten 20 die Kupplungen der maschinenseitigen Anschlußleisten 8 aufgestossen und die entsprechenden Verbindungen zwischen den Leitungen 9 und 21 hergestellt. Wie aus Fig. 5 hervorgeht, wird durch die Betätigung des oberen, an der beweglichen Formaufspannplatte 3 befindlichen Spannelements 5 der Verriegelungshebel 22 aus der Raststellung ausgeschwenkt, so daß nunmehr die Werkzeughälften entriegelt sind. Der Werkzeugwechsel ist damit vollzogen und die Spritzgießmaschine ist betriebsbereit.

## Patentansprüche

1. Werkzeug-Einbau- und Spannvorrichtung an einer Spritzgießmaschine, mit je einer an den Formaufspannplatten (1, 3) der Spritzgießmaschine befestigten Konsole (14) zur höhenmässig exakt ausgerichteten Abstützung des Werkzeuges, mit Seitenführungen (25) an den Formaufspannplatten zur seitlich exakten Ausrichtung des Werkzeuges, mit Spannelementen zum Festspannen der Werkzeughälften auf der jeweils zugeordneten Formaufspannplatte und mit werkzeugseitigen sowie maschinenseitigen Anschlußleisten (20), die Anschlüsse für die Temperierung des Werkzeuges, die Energieversorgung und dgl. enthalten und im Zuge des Einbauvorganges miteinander kuppelbar sind, dadurch gekennzeichnet, daß jede Konsole (14) eine sich senkrecht von der zugeordneten Formaufspannplatte (1, 3) weg erstreckende Führungsfläche (16) aufweist, daß die Seitenführungen (25) zur jeweiligen Formaufspannplatte (1, 3) hin und zur Mittelachse (M) der Formaufspannplatten konvergierende Seitenführungsflächen (26) aufweisen, und daß das Werkzeug (6) durch Zusammenfahren der Formaufspannplatten (1, 3) auf der Führungsfläche (16) jeder Konsole (14) zu den Formaufspannplatten hin verschiebbar ist, wobei die konvergierenden Seitenführungsflächen (26) mit den Werkzeugseitenrändern (12) zusammenwirken und das Werkzeug (6) seitlich exakt ausrichten.

2. Vorrichtung nach Anspruch 1, dadurch gekennzeichnet, daß die Konsole (14) durch eine Mehrzahl von sich parallel nebeneinander von der Formaufspannplatte (1, 3) weg erstreckenden Armen (15) gebildet ist, wobei die Arme (15) der einen Konsole zu den Armen der anderen Konsole derart versetzt angeordnet sind, daß sie beim Zusammenfahren der Formaufspannplatten jeweils in die Lücken der gegenüberliegenden Konsole einfahren können.

3. Vorrichtung nach Anspruch 1 oder 2, dadurch gekennzeichnet, daß an dem freien Rand jeder Konsole (14) eine hochstehende Schulter (17) ausgebildet ist.

4. Vorrichtung nach einem der Ansprüche 1 bis 3, dadurch gekennzeichnet, daß zumindest eine Werkzeughälfte zusätzliche, mit der Zentrieröffnung der jeweils zugeordneten Formaufspannplatte (1, 3) zusammenwirkende Zentrierelemente (13) trägt.

5. Vorrichtung nach Anspruch 4, dadurch gekennzeichnet, daß die zusätzlichen Zentrierelemente (13) bezüglich der Zentrieröffnung diametral gegenüberliegende Kreisringsegmente sind.

6. Vorrichtung nach einem der Ansprüche 1 bis 5, dadurch gekennzeichnet, daß die werkzeugseitigen Anschlußleisten (20) an mindestens einem Rand des Werkzeuges (6) angeordnet sind und die Anschlüsse in Bewegungsrichtung der Formaufspannplatte ausgerichtet sind.

7. Vorrichtung nach einem der Ansprüche 1 bis 6, dadurch gekennzeichnet, daß an der beweglichen Formaufspannplatte (3) ein Auswerfermechanismus (10) und an der zugeordneten Werkzeughälfte ein Auswerferstift (11) angeordnet sind, die beim Zusammenfahren der Formaufspannplatten (1, 3) selbsttätig miteinander kuppelbar sind.

8. Vorrichtung nach Anspruch 7, dadurch gekennzeichnet, daß die Führungsfläche (16) der an der beweglichen Formaufspannplatte (3) angeordneten Konsole (14) - gemessen in Bewegungsrichtung der Formaufspannplatte - länger als diejenige der gegenüberliegenden Konsole (14) ist.

9. Vorrichtung nach einem der Ansprüche 1 bis 8, mit einem seitlich an die Spritzgießmaschine heranfahrbaren Werkzeugwagen (30), der eine Verschiebefläche für das Werkzeug und eine Schiebevorrichtung zum Einschieben des Werkzeuges zwischen die Formaufspannplatten von der Seite her aufweist, dadurch gekennzeichnet, daß die Verschiebefläche durch zwei zueinander parallele, den Werkzeugkanten (12) zugeordnete Schienen (31, 32) gebildet ist, von denen die der feststehenden Formaufspannplatte (1) zugeordnete Schiene (31) feststehend und die andere Schiene (32) in Querrichtung verstellbar ist.

10. Vorrichtung nach Anspruch 9, dadurch gekennzeichnet, daß die Führungsfläche (16) der Konsole (14) höher als das untere Holmpaar (2) der Spritzgießmaschine liegt.

11. Vorrichtung nach Anspruch 9, dadurch gekennzeichnet, daß der Werkzeugwagen (30) um eine Vertikalachse (V) um 180° schwenkbar ist und zwei Aufnahmeplätze (Schienenpaare 31, 32) für Werkzeuge aufweist.

12. Vorrichtung nach einem der Ansprüche 9 bis 11, dadurch gekennzeichnet, daß die Schienen (31, 32) und die Führungsflächen (16) der Konsolen (14) einen reibungsmindernden, verschleißarmen Belag tragen.

13. Vorrichtung nach einem der Ansprüche 9 bis 12, dadurch gekennzeichnet, daß die freien Enden der Schienen (31, 32) über Zentrier- und Stützelemente (45, 46) an dem Gestell der Spritzgießmaschine abstützbar sind.

## Claims

1. A tool fitting and clamping apparatus on an injection moulding machine comprising a respective support bracket (14) secured to each of the mould mounting plates (1, 3) of the injection moulding machine, for supporting the tool in a condition of precise alignment in respect of height, lateral guides (25) on the mould mounting plates for laterally precise alignment of the tool, clamping elements for clamping the tool halves on the respectively associated mould mounting plate and connecting bars (20) on the tool side and on the machine side, which contain connections for temperature control of the tool, power supply and the like and which can be coupled together in the course of the fitting operation, characterised in that each support bracket (14) has a guide surface (16) which extends perpendicularly away from the associated mould mounting plate (1, 3), that the lateral guides (25) have lateral guide surfaces (26) which converge towards the respective mould mounting plate (1, 3) and towards the centre line (M) of the mould mounting plates, and that the tool (6) is displaceable towards the mould mounting plates by moving the mould mounting plates (1, 3) towards each other on the guide surface (16) of each support bracket (14), wherein the convergent lateral guide surfaces (26) co-operate with the side edges (12) of the tool and laterally precisely align the tool (6).

2. Apparatus according to claim 1, characterised in that the support bracket (14) is formed by a plurality of arms (15) which extend away from the mould mounting plate (1, 3) in parallel juxtaposed relationship with each other wherein the arms (15) of the one support bracket are arranged in displaced relationship with the arms of the other support bracket in such a way that when the mould mounting plates are moved towards each other the arms can respectively engage into the gaps in the oppositely disposed support bracket.

3. Apparatus according to claim 1 or claim 2, characterised in that an upwardly extending shoulder (17) is provided at the free edge of each support bracket (14).

4. Apparatus according to one of claims 1 to 3, characterised in that at least one tool half carries additional centering elements (13) co-operating with the centering opening in the respectively associated mould mounting plate (1, 3).

5. Apparatus according to claim 4, characterised in that the additional centering elements (13) are circular ring segments which are in diametrally opposite relationship with respect to the centering opening.

6. Apparatus according to one of claims 1 to 5, characterised in that the connecting bars (20) on the tool side are arranged at at least one edge of the tool (6) and the connections are aligned in the direction of movement of the mould mounting plate.

7. Apparatus according to one of claims 1 to 6, characterised in that an ejector mechanism (10) is disposed on the movable mould mounting plate (3) and an ejector pin (11) is disposed on the associated tool half, which ejector mechanism and pin can be automatically coupled together when the mould mounting plates (1, 3) are moved towards each other.

8. Apparatus according to claim 7, characterised in that the guide surface (16) of the support bracket (14) which is disposed on the movable mould mounting plate (3) – as measured in the direction of movement of the moulding mounting plate – is longer than that of the oppositely disposed support bracket (14).

9. Apparatus according to one of claims 1 to 8, comprising a tool carriage (30) which can be moved laterally to the injection moulding machine and which has a displacement surface for the tool and a pushing means for pushing the tool into position between the mould mounting plates from the side, characterised in that the displacement surface is formed by two mutually parallel rails (31, 32) which are associated with the tool edges (12) and of which the rail (31) which is associated with the stationary mould mounting plate (1) is stationary and the other rail (32) is displaceable in a transverse direction.

10. Apparatus according to claim 9, characterised in that the guide surface (16) of the support bracket (14) is disposed at a higher level than the lower pair of beam members (2) of the injection moulding machine.

11. Apparatus according to claim 9, characterised in that the tool carriage (30) is pivotable through 180° about a vertical axis (V) and has two receiving locations (pairs of rails 31, 32) for tools.

12. Apparatus according to one of claims 9 to 11, characterised in that the rails (31, 32) and the guide surfaces (16) of the support brackets (14) have a friction-reducing, low-wear coating.

13. Apparatus according to one of claims 9 to 12, characterised in that the free ends of the rails (31, 32) can be supported on the frame structure of the injection moulding machine by way of centering and support elements (45, 46).

**Revendications**

1. Dispositif de montage et de serrage d'un moule dans une machine de moulage par injection comprenant une console (14) fixée à chacun des plateaux de serrage de moule (1, 3) de la machine de moulage par injection pour le support aligné avec précision, en hauteur, du moule, des guidages latéraux (25) sur les plateaux de serrage du moule destinés à l'alignement latéral précis du moule, des éléments de serrage des moitiés de moule sur le plateau de serrage respectivement adjoint et des plaques à raccords (20) du côte moule ainsi que du côté machine, qui comportent des raccords destinés à l'équilibrage de la température du moule, à l'alimentation en énergie et à des tâches analogues et qui peuvent être couplées mutuellement au cours de l'opération de montage, caractérisé en ce que chaque console (14) présente une surface de guidage (16) qui s'étend perpendiculairement à partir du plateau de serrage de moule adjoint (1, 3), en ce que les guidages latéraux (25) présentent des surfaces de guidage latérales (26) convergeant vers le plateau de serrage de moule respectif (1, 3) et vers l'axe médian (M) des plateaux de serrage de moule, et en ce que le moule (6) est capable de coulisser sur la surface de guidage (16) de chaque console (14) vers les plateaux de serrage de moule par le rapprochement des plateaux de serrage de moule (1, 3), les surfaces de guidage latérales convergentes (26) coopérant avec les bords latéraux (12) du moule et le moule (6) s'alignant latéralement avec précision.

2. Dispositif suivant la revendication 1, caractérisé en ce que le console (14) est formée de plusieurs bras (15) qui s'étendent parallèlement l'un à côté de l'autre à partir du plateau de serrage de moule (1, 3), les bras (15) de l'une des consoles étant agencés de manière décalée par rapport aux bras de l'autre console de telle façon qu'ils puissent pénétrer chaque fois dans les creux de la console opposée lorsque se rapprochent les plateaux de serrage de moule.

3. Dispositif suivant la revendication 1 ou 2, caractérisé en ce qu'un épaulement surélevé (17) est réalisé sur le bord libre de chaque console (14).

4. Dispositif suivant l'une des revendications 1 à 3, caractérisé en ce qu'au moins une moitié de moule porte des éléments de centrage supplémentaires (13) qui coopèrent avec l'ouverture de centrage du plateau de serrage de moule respectivement adjoint (1, 3).

5. Dispositif suivant la revendication 4, caractérisé en ce que les éléments de centrage supplémentaires (13) sont des segments d'anneau de cercle situés diamétralement en face de l'ouverture de centrage.

6. Dispositif suivant l'une des revendications 1 à 5, caractérisé en ce que les plaques à raccords (20) situées du côté moule sont agencées sur au moins un bord du moule (6) et en ce que les raccords sont alignés suivant la direction du mouvement des plateaux de serrage de moule.

7. Dispositif suivant l'une des revendications 1 à 6, caractérisé en ce que sur le plateau de serrage de moule mobile (3) est agencé in mécanisme d'éjection (10) et sur la moitié du moule adjointe, une tige d'éjection (11), qui peuvent être couplés l'un à l'autre automatiquement lors du rapprochement des plateaux de serrage de moule (1, 3).

8. Dispositif suivant la revendication 7, caractérisé en ce que, mesurée suivant la direction du mouvement du plateau de serrage de moule, la surface de guidage (16) de la console (14) qui est agencée sur le plateau de serrage de moule mobile (3) est plus longue que celle de la console opposée (14).

9. Dispositif suivant l'une des revendications 1 à 8, comprenant un chariot à moule (30) qui peut être transporté latéralement à la machine de moulage par injection et qui présente une surface de coulissement destinée au moule et un dispositif pousseur pour l'introduction du moule entre les plateaux de serrage de moule par le côté, caractérisé en ce que la surface de coulissement est formée par deux rails (31, 32) mutuellement parallèles, qui sont adjoints aux bords de moule (12) et dont le rail (31) adjoint au plateau de serrage de moule fixe (1) est fixe et dont l'autre rail (32) peut être déplacé en direction transversale.

10. Dispositif suivant la revendication 9, caractérisé en ce que la surface de guidage (16) de la console (14) est plus élevée que la paire inférieure de longerons (2) de la machine de moulage par injection.

11. Dispositif suivant la revendication 9, caractérisé en ce que le chariot à moule (30) peut être amené à pivoter de 180° autour d'un axe vertical (V) et en ce qu'il présente deux emplacements de réception (paire de rails 31, 32), destinés à des moules.

12. Dispositif suivant l'une des revendications 9 à 11, caractérisé en ce que les rails (31, 32) et les surfaces de guidage (16) des consoles (14) portent un revêtement diminuant le frottement et résistant à l'usure.

13. Dispositif suivant l'une des revendications 9 à 12, caractérisé en ce que les extrémités libres des rails (31, 32) peuvent s'appuyer sur le châssis de la machine de moulage par injection par des éléments de centrage et de support (45, 46).

Fig.1

Fig.3

Fig. 2

EP 0 183 944 B1

Fig. 5

Fig. 4

Fig. 6

EP 0 183 944 B1

Fig. 7

EP 0 183 944 B1

Fig. 8